# EUROPÄISCHE PATENTSCHRIFT

(11) **EP 1 683 602 B1**
(45) Veröffentlichungstag und Bekanntmachung des Hinweises auf die Patenterteilung: **26.09.2007**
(21) Anmeldenummer: 06000964.4
(22) Anmeldetag: 18.01.2006
(51) Int. Cl.: B23Q 1/01, B23Q 11/00, B24B 41/00

(54) **Maschinengestell für eine Werkzeugmaschine**
Mounting for a machine tool
Bâti pour machine-outil

(30) Priorität: 22.01.2005 DE 102005003055
(43) Veröffentlichungstag der Anmeldung: 26.07.2006
(73) Patentinhaber: Waldrich Siegen Werkzeugmaschinen GmbH, 57299 Burbach (DE)
(72) Erfinder: Kleinhans, Gerhard, 35708 Haiger (DE); Kuhr, Lothar, 57234 Wilnsdorf (DE)
(74) Vertreter: Schwarz, Thomas

(56) Entgegenhaltungen:
- GB-A- 875 513
- GB-A- 1 485 600
- US-A- 4 468 160
- "CENTERLESS GRINDER NEEDS NO WARM-UP" MACHINE DESIGN, PENTON MEDIA, CLEVELAND, OH, US, Bd. 63, Nr. 14, 11. Juli 1991 (1991-07-11), Seite 42, XP000241478 ISSN: 0024-9114

## Beschreibung

Die Erfindung betrifft ein Maschinengestell für eine Werkzeugmaschine nach dem Oberbegriff des Anspruchs 1 (siehe z.B. Dokument US 4,468,160).

Um bei Werkzeugmaschinen eine schwingungsisolierte und steife Aufstellung zu ermöglichen, wird vielfach ein aus Beton hergestellter Fundamentblock verwendet, der auf das Hallenfundament aufgesetzt bzw. in eine entsprechende Vertiefung des Hallenbodens eingesetzt und durch geeignete Federelemente von den Umgebungsschwingungen des Hallenfundaments abgekoppelt wird. Auf den Fundamentsblock wird dann das eigentliche Maschinenbett aufgesetzt und durch entsprechende Befestigungselemente fest mit dem Fundamentblock verbunden. Eine derartige Maschinenaufstellung erfordert jedoch einen relativ hohen Fertigungs- und Montageaufwand und ist mit entsprechend hohen Kosten verbunden. So muss der Fundamentblock gesondert hergestellt und zum Einsetzen der Federelemente entsprechend angehoben werden.

Es sind auch bereits Maschinengestelle bekannt, bei denen auf einen Fundamentblock verzichtet wird. Zur Verbesserung der Steifigkeit wird das als Rahmen oder Kasten ausgeführte Maschinenbett mit einer geeigneten Masse (z.B. Beton) ausgegossen und über geeignete Dämpfungselemente auf das Hallenfundament aufgelegt. Eine derartige Maschinenaufstellung weist jedoch gegenüber der Ausführung mit dem Fundamentblock eine geringere Steifigkeit auf. Außerdem besteht keine Möglichkeit, das Maschinenbett nachträglich auszurichten.

Bei einer aus der EP 1 084 796 A2 bekannten Walzenschleifmaschine besteht das Maschinengestell zur Verbesserung der Steifigkeit aus einem als monolithischer Block ausgeführten Unterteil und mehreren mit diesem fest verschraubten oberen Maschinenbetten, die zur Halterung der unterschiedlichen Maschinenkomponenten dienen. Das Unterteil besteht aus einem Epoxidharz-Granit-Verbundwerkstoff und enthält eine obere Deckplatte aus Stahl, auf der die oberen Maschinenbetten festgeschraubt sind. Auch hier sind die oberen Maschinenbetten starr mit dem Unterteil verbunden, so dass keine Möglichkeit zur nachträglichen Ausrichtung besteht.

Aufgabe der Erfindung ist es, ein Maschinengestell der eingangs genannten Art zu schaffen, das eine einfache Ausricht- und Nachrichtmöglichkeit bietet und neben einer hohen Gesamtsteifigkeit auch gleichzeitig gute Dämpfungseigenschaften aufweist.

Diese Aufgabe wird durch ein Maschinengestell mit den Merkmalen des Anspruchs 1 gelöst. Zweckmäßige Ausgcstaltungen und vorteilhafte Weiterbildungen der Erfindung sind in den Unteransprüchen angegeben.

Bei dem erfindungsgemäßen Maschinengestell sind ein Unterteil und ein auf diesem angeordnetes Maschinenbett jeweils als mit Rippen verstärkter Kasten ausgebildet und über zwischengeschaltete Aushchtcinheiten und Befestigungselemente zu einer ausrichtbaren Einheit mit einer hohen Gesamtsteifigkeit und sehr guten Dämpfungseigenschaften fest miteinander verbunden. Durch die Verbindung von Maschinenbett und Unterteil über die Stellkeile ergeben sich eine große Anzahl von Fügestellen, in denen durch kleine Relativverschiebungen bedingte Dämpfungseffekte auftreten. Dadurch kann das Dämpfungsverhalten des Maschinengestells verbessert werden. Andrerseits wird durch die Verbindung von Maschinenbett und Unterteil eine hohe Gesamtsteifigkeit des Maschinengestells erreicht. Das erfindungsgemäße Maschinengestell weist eine hohe dynamische und statische Steifigkeit mit optimalen Nachrichtmöglichkeiten auf. Durch die Stellkeile kann das Maschinenbett optimal ausgerichtet bzw. nachgerichtet werden. Im Vergleich zu herkömmlichen Fundament-Bett-Systemen ist außerdem eine erhebliche Kostenreduzierung möglich. Das Maschinengestell ist einfach herstellbar und ermöglicht eine ausgezeichnete Schwingungsisolation sowie ein hervorragendes thermo-elastisches Verhalten. Darüber hinaus ist durch die Trennung von Maschinenbett und Unterteil ein Transport einer Maschine wesentlich einfacher und kostengünstiger.

In einer besonders zweckmäßigen Ausführung sind das Unterteil und/oder das Maschinenbett mit einem geeigneten Füllmaterial, vorzugsweise Beton oder Polymcrbcton ausgegossen. Dadurch kann die Masse erhöht und die Eigensteifigkeit des Maschinengestells weiter verbessert werden.

An der Unterseite des Unterteils sind zweckmäßigerweise Dämpfungsmatten oder andere geeignete Dämpfungselemente vorgesehen, über die das Unterteil auf einem Hallenboden bzw. dem Hallenfundament aufsteht. Dadurch wird eine gute Schwingungsisolation erreicht.

In einer besonders stabilen Ausführung weisen die Ausrichteinheiten zwei übereinander angeordnete, relativ zueinander verschiebbare Keile auf. Zweckmäßigerweise ist einer der beiden Keile verschiebbar, während der andere gegen Verschiebung gesichert ist. Es können aber auch andere geeignete Ausricht- oder Nivelliereinheiten zum Einsatz gelangen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erfindungsgemäßes Maschinengestell im Querschnitt und
- **Figur 2**: eine Detailansicht einer zwischen dem Unterteil und dem Maschinenbett angeordneten Ausrichteinheit.

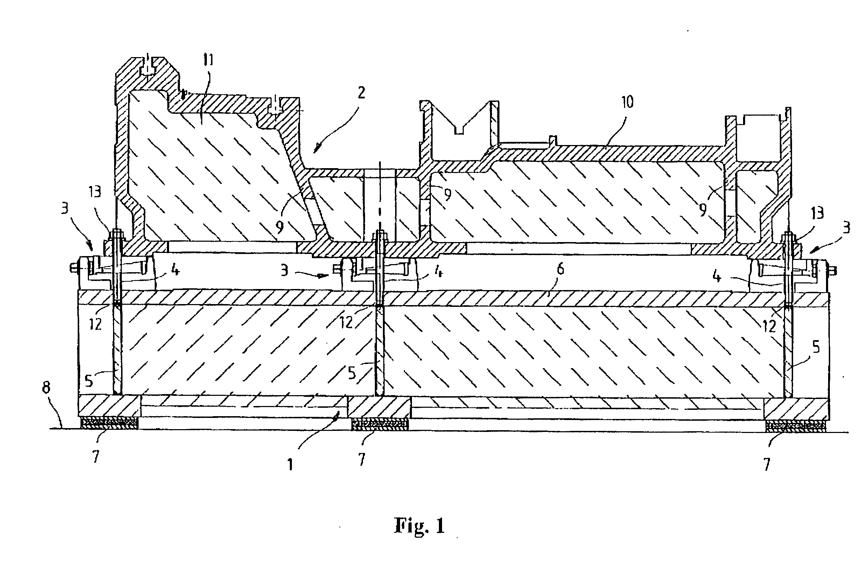

Das in Figur 1 in einem Querschnitt dargestellte Maschinengestell einer Werkzeugmaschine besteht aus einem Unterteil 1 und einem Maschinenbett 2, die über zwischengeschaltete Ausrichteinheiten 3 und Befestigungselemente 4 fest miteinander verbunden sind. Das Unterteil 1 besteht aus einem mit Rippen 5 versteiften Kasten 6, der über Dämpfungsmatten 7 oder andere geeignete Dämpfungselemente auf einem normalen Hallenfundament 8 aufsteht. Auch das Maschinenbett 2 ist als mit Rippen 9 versteifter Kasten 10 ausgeführt und enthält geeignete Aufnahmen und/oder Führungen für die einzelnen Komponenten und Bauteile einer Werkzeugmaschine. Sowohl der Kasten 6 des Unterteils 1 als auch der Kasten 10 des Maschinenbetts 2 sind mit einen Füllmaterial 11, vorzugsweise Beton oder Polymerbeton, ausgegossen. Der Kasten 6 des Unterteils 1 und der Kasten 10 des Maschinenbetts 2 ist zweckmäßigerweise als geschweißte, gegossene oder anderweitig gefertigte Metallkonstruktion ausgeführt.

Auf der Oberseite des Unterteils 1 sind geeignete Aufnahmen 12 für die Befestigungselemente 4 vorgesehen. Bei der hier gezeigten Ausführung sind die Befestigungselemente 4 als Ankerschrauben und die dazugehörigen Aufnahmen 12 als Gewindebohrungen oder Gewindebuchsen in der Oberseite des Kastens 6 ausgeführt. In dem Maschinenbett 2 sind entsprechende Bohrungen bzw. Öffnungen 13 für die Befestigungselemente 4 vorgesehen.

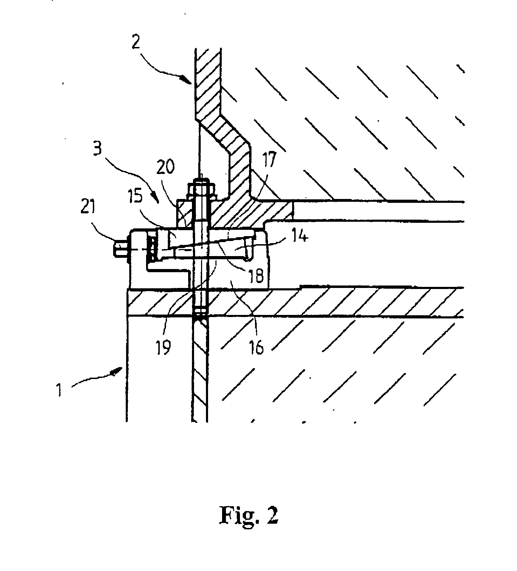

Wie besonders aus Figur 2 hervorgeht, enthalten die Ausrichteinheiten 3 zwei übereinander angeordnete Keile 14 und 15, die in einer auf dem Unterteil 1 angeordneten Halterung 16 geführt sind. Die beiden Keile 14 und 15 weisen einander zugewandte Keilflächen 17 und 18 sowie obere bzw. untere gerade Auflageflächen 19 bzw. 20 auf Die beiden Keile 14 und 15 sind derart angeordnet, dass durch deren Relativverschiebung die Höhe der geraden Auflagefläche 20 des oberen Keils 15 eingestellt werden kann. Über die Ausrichteinheiten 3 wird so eine Höhenverstellung bzw, ein genaues Richten und auch späteres Nachrichten des Maschinenständers 2 ermöglicht. Bei der gezeigten Ausführung ist nur der untere Keil 14 über eine seitliche Stellschraube 21 verstellbar, während der obere Keil 15 innerhalb der Halterung 16 gegen seitliche Verschiebung gesichert ist. Wenn der Maschinenständer 2 über die Ausrichteinheiten 3 ausgerichtet ist, kann dieser über die Befestigungselemente 4 fest mit dem Unterteil 1 verbunden werden.

## Patentansprüche

1. Maschinengestell für eine Werkzeugmaschine mit einem Unterteil (1) und einem auf dem Unterteil (1) angeordneten Maschinenbett (2), **dadurch gekennzeichnet, dass** das Unterteil (1) und das Maschinenbett (2) jeweils als mit Rippen (5, 9) verstärkter Kasten (6, 10) ausgeführt und über zwischengeschaltete Ausrichteinheiten (3) und Befestigungselemente (4) zu einer ausrichtbaren Einheit fest miteinander verbunden sind.

2. Maschinengestell nach Anspruch 1, **dadurch gekennzeichnet, dass** der Kasten (6) des Unterteils (1) und/oder der Kasten (10) des Maschinenbetts (2) mit einem Füllmaterial (11), vorzugsweise Beton oder Polymerbeton, ausgegossen ist.

3. Maschinengestell nach Anspruch 1 oder 2, **dadurch gekennzeichnet dass** der Kasten (6) des Unterteils (1) und/oder der Kasten (10) des Maschinenbetts (2) als geschweißte oder gegossene Metallkonstruktion ausgeführt ist.

4. Maschinengestell nach einem der Ansprüche 1 bis 3, **dadurch gekennzeichnet, dass** an der Unterseite des Unterteils (1) Dämpfungsmatten (7) oder andere geeignete Dämpfungselemente angeordnet sind.

5. Maschinengestell nach einem der Ansprüche 1 bis 4, **dadurch gekennzeichnet, dass** die Ausrichteinheiten (3) zwei übereinander angeordnete und relativ zueinander verschiebbare Keile (14, 15) enthalten.

6. Maschinengestell nach Anspruch 5, **dadurch gekennzeichnet, dass** die Keile (14, 15) in einer auf dem Unterteil (1) angeordneten Halterung (16) geführt sind.

7. Maschinengestell nach Anspruch 5 oder 6, **dadurch gekennzeichnet, dass** die Keile (14, 15) einander zugewandte Keilflächen (17, 18) und gerade Auflageflächen (19, 20) aufweisen.

8. Maschinengestell nach einem der Ansprüche 5 bis 7, **dadurch gekennzeichnet, dass** einer der Keile (14, 15) über eine Stellschraube (21) verschiebbar und der andere gegen seitliche Verschiebung gesichert ist.

9. Maschinengestell nach einem der Ansprüche 1 bis 8, **dadurch gekennzeichnet, dass** die Befestigungselemente (4) als Ankerschrauben ausgeführt sind.

## Claims

1. Machine frame for a machine tool with a lower part (1) and a machine bed (2) arranged on the lower part (1), **characterised in that** the lower part (1) and the machine bed (2) are in each case embodied as a box (6, 10) reinforced with ribs (5, 9) and connected securely together by means of interposed alignment units (3) and fastening elements (4) to form an alignable unit.

2. Machine frame according to claim 1, **characterised in that** the box (6) of the lower part (1) and/or the box (10) of the machine bed (2) is filled with a cast filling material (11), preferably concrete or polymer concrete.

3. Machine frame according to claim 1 or 2, **characterised in that** the box (6) of the lower part (1) and/or the box (10) of the machine bed (2) is embodied as a welded or cast metal structure.

4. Machine frame according to one of claims 1 to 3, **characterised in that** damping mats (7) or other suitable damping elements are arranged on the underside of the lower part (1).

5. Machine frame according to one of claims 1 to 4, **characterised in that** the alignment units (3) comprise two wedges (14, 15) which are arranged one over the other and displaceable relative to one another.

6. Machine frame according to claim 5, **characterised in that** the wedges (14, 15) are guided in a mounting (16) arranged on the lower part (1).

7. Machine frame according to claim 5 or 6, **characterised in that** the wedges (14, 15) exhibit wedge faces (17, 18) which face one another, and straight bearing faces (19, 20).

8. Machine frame according to one of claims 5 to 7, **characterised in that** one of the wedges (14, 15) is displaceable by means of an adjusting screw (21) and the other is secured to prevent lateral displacement.

9. Machine frame according to one of claims 1 to 8, **characterised in that** the fastening elements (4) are embodied as anchor bolts.

## Revendications

1. Bâti de machine pour une machine-outil comprenant une partie inférieure (1) et un socle de machine (2) disposé sur la partie inférieure (1), **caractérisé en ce que** la partie inférieure (1) et le socle de machine (2) sont conçus respectivement comme des caissons (6, 10) renforcés par des nervures (5, 9) et sont reliés solidement l'une à l'autre par des unités d'orientation intercalées (3) et des éléments de fixation pour former une unité orientable.

2. Bâti de machine selon la revendication 1, **caractérisé en ce que** le caisson (6) de la partie inférieure (1) et/ou le caisson (10) du socle de machine (2) sont garnis d'un matériau de remplissage (11), de préférence de béton ou de béton polymère.

3. Bâti de machine selon la revendication 1 ou 2, **caractérisé en ce que** le caisson (6) de la partie inférieure (1) et/ou le caisson (10) du socle de machine (2) sont conçus comme une construction métallique soudée ou coulée.

4. Bâti de machine selon l'une quelconque des revendications 1 à 3, **caractérisé en ce que** des tapis d'amortissement (7) ou d'autres éléments d'amortissement appropriés sont disposés sur le côté inférieur de la partie inférieure (1).

5. Bâti de machine selon l'une quelconque des revendications 1 à 4, **caractérisé en ce que** les unités d'orientation (3) contiennent deux cales (14, 15) juxtaposées et mobiles l'une par rapport à l'autre.

6. Bâti de machine selon la revendication 5, **caractérisé en ce que** les cales (14, 15) sont guidées dans une fixation (16) disposée sur la partie inférieure (1).

7. Bâti de machine selon la revendication 5 ou 6, **caractérisé en ce que** les cales (14, 15) comprennent des surfaces cunéiformes (17, 18) tournées l'une vers l'autre et des surfaces d'appui rectilignes (19, 20).

8. Bâti de machine selon l'une quelconque des revendications 5 à 7, **caractérisé en ce qu'**une des cales (14, 15) peut être déplacée par une vis de serrage (21) et l'autre est empêchée de se déplacer latéralement.

9. Bâti de machine selon l'une quelconque des revendications 1 à 8, **caractérisé en ce que** les éléments de fixation (4) sont conçus comme des vis d'ancrage.
